# DEMANDE DE BREVET EUROPEEN

(11) **EP 3 439 346 A1**
(43) Date de publication de la demande: **06.02.2019**
(21) Numéro de dépôt: 17306020.3
(22) Date de dépôt: 31.07.2017
(51) Int. Cl.: H04W 12/08, G06F 21/32, H04L 29/06, G06F 3/0488, G06F 9/44, G06F 3/0481, H04W 12/06, G06F 21/36, G06F 3/041

(54) **COMPOSANT D'INTERFACE D'UTILISATEUR ET PROCEDE D'AUTHENTIFICATION DE CET UTILISATEUR**

(71) Demandeur: GEMALTO SA, 92190 Meudon (FR)
(72) Inventeur: Frédéric, FAURE, 13881 GEMENOS cedex (FR)

(57) **Abrégé**

L'invention concerne notamment un composant d'interface d'utilisateur (21) d'un appareil (11) coopérant avec un écran tactile (12), le composant d'interface d'utilisateur (21) permettant à une application (46) d'effectuer une action définie par l'application (46) lorsque l'utilisateur appuie ou glisse avec un doigt sur le composant d'interface d'utilisateur (21), l'écran tactile (12) permettant de capturer une empreinte digitale de l'utilisateur.

Selon l'invention, l'emplacement du composant d'interface d'utilisateur (21) est aligné avec l'emplacement d'un moyen de capture (20-1 - 20-33) de l'empreinte digitale, le composant d'interface d'utilisateur (21) coopérant avec des moyens de saisie et de comparaison (42) de l'empreinte digitale de l'utilisateur avec une empreinte digitale de référence (41), les moyens de comparaison (42) autorisant l'application (46) à réaliser l'action en mode sécurisé (47) si l'empreinte digitale de l'utilisateur correspond à l'empreinte de référence (41) et interdisant la réalisation de cette action en mode sécurisé (47) dans le cas contraire.

## Description

Le domaine de l'invention est celui des composants d'interfaces graphiques (aussi connus sous le nom de widgets ou composants d'interface d'utilisateur) tels que par exemples des boutons, des barres de défilement ou des liens Internet affichables sur un écran tactile. L'écran tactile coopère avec un appareil (il peut être déporté de cet appareil et ne pas en faire partie intégrante ou en faire partie intégrante). Le terminal est par exemple un terminal de télécommunications tel qu'un smartphone ou une tablette, un PDA ou un distributeur de billets (DAB).

L'invention s'applique dans le cas où l'on désire authentifier un utilisateur de ce terminal grâce à une de ses empreintes digitales.

Dans l'état de la technique, lorsque par exemple un utilisateur utilise son smartphone pour se connecter par Internet à sa banque, il entre l'adresse Internet de sa banque et s'identifie à l'aide de son login et mot de passe. La page Web qui lui est alors présentée par sa banque comporte des composants d'interface graphique lui permettant d'effectuer différentes opérations, tels que consultation du solde de son compte, effectuer des transferts d'argent, commander des chéquiers, etc... Ces opérations (ou encore actions) sont par définition des opérations sensibles et la banque peut demander à l'utilisateur de s'authentifier de manière plus forte (en l'occurrence en comparant l'empreinte digitale de l'utilisateur avec une empreinte digitale de référence qu'il aura préalablement enregistrée lors d'une phase d'enregistrement).

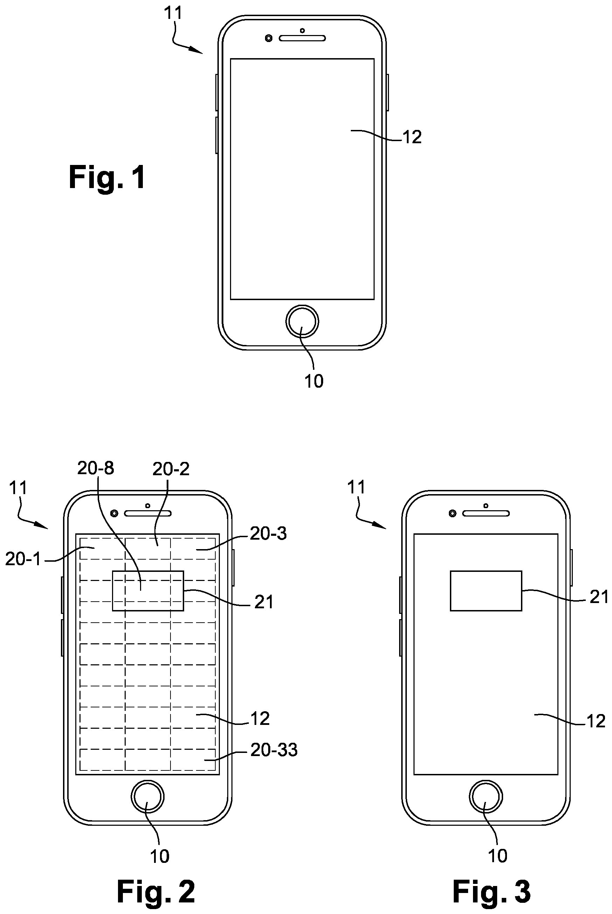

Dans ce cas, une fois que l'utilisateur a sélectionné une opération à effectuer en appuyant sur un des composants graphiques ou effectué un glissement de son doigt sur ce composant graphique, la banque lui demande de poser un de ses doigts sur le bouton accueil (ou « home » en anglais) de son smartphone (tel que le bouton référencé 10 sur la figure 1), ce bouton renfermant un lecteur d'empreinte digitale. L'empreinte digitale capturée par le smartphone 11 est alors comparée, soit localement au niveau du smartphone, soit au niveau d'un serveur de la banque, avec l'empreinte digitale de référence de l'utilisateur.

Si les deux empreintes coïncident, l'utilisateur est authentifié et une nouvelle page s'affiche sur l'écran du smartphone 11 : l'action sécurisée (ou encore opération sécurisée) est effectuée et l'utilisateur a accès au solde de son compte par exemple.

L'inconvénient de cette solution connue est que l'utilisateur doit effectuer deux actions successives afin d'exécuter une action sécurisée : il doit d'abord sélectionner l'action souhaitée et ensuite faire saisir son empreinte digitale.

On connaît par ailleurs, par le document US-9,460,332 d'Apple (marque protégée), un capteur d'empreinte digitale permettant de saisir une empreinte digitale d'un utilisateur lorsque celui-ci appuie un de ses doigts sur un endroit quelconque de l'écran tactile 12 du smartphone 11.

La présente invention a pour objectif de simplifier l'exécution par un utilisateur d'une action sécurisée.

A ce titre l'invention propose un composant d'interface d'utilisateur d'un appareil coopérant avec un écran tactile, le composant d'interface d'utilisateur permettant à une application d'effectuer une action définie par l'application lorsque l'utilisateur appuie ou glisse avec un doigt sur le composant d'interface d'utilisateur, l'écran tactile permettant de capturer une empreinte digitale de l'utilisateur, l'emplacement du composant d'interface d'utilisateur étant aligné avec l'emplacement d'un moyen de capture de l'empreinte digitale, le composant d'interface d'utilisateur coopérant avec des moyens de saisie et de comparaison de l'empreinte digitale de l'utilisateur avec une empreinte digitale de référence, les moyens de comparaison autorisant l'application à réaliser l'action en mode sécurisé si l'empreinte digitale de l'utilisateur correspond à l'empreinte de référence et interdisant la réalisation de l'action en mode sécurisé dans le cas contraire.

Préférentiellement, le composant d'interface d'utilisateur consiste en l'un des éléments suivants :
- Un lien Internet
- Un bouton d'accès à une application
- Un élément d'une liste déroulante
- Un élément d'un tableau
- Une case à cocher
- Un onglet

L'invention concerne également un procédé d'authentification d'un utilisateur d'un appareil coopérant avec un écran tactile, l'authentification consistant à comparer une empreinte digitale de l'utilisateur avec une empreinte digitale de référence, ce procédé consistant à :
- Afficher un composant d'interface d'utilisateur sur l'écran tactile ;
- Authentifier positivement l'utilisateur si ce dernier appuie ou effectue un glissement avec un de ses doigts sur le composant d'interface d'utilisateur et que l'empreinte digitale capturée lors de l'appui ou du glissement correspond à l'empreinte digitale de référence.

De préférence, l'écran tactile est du type permettant de capturer une empreinte digitale sur toute sa surface.

Le procédé selon l'invention comprend préférentiellement une étape de positionnement alignant l'emplacement du composant d'interface d'utilisateur avec l'emplacement du moyen de capture de l'empreinte digitale de l'utilisateur.

Avantageusement, le positionnement est effectué avant la comparaison de l'empreinte capturée avec l'empreinte digitale de référence.

Préférentiellement, le procédé consiste à inviter l'utilisateur à entrer un code si l'authentification est négative.

Avantageusement, le procédé consiste à informer l'utilisateur, par un retour tactile, sonore ou graphique, que son empreinte est en cours d'authentification.

Préférentiellement, lorsque l'utilisateur est authentifié positivement, l'appareil le lui indique par un retour tactile, sonore ou graphique.

L'invention concerne également un appareil coopérant avec un écran tactile, cet appareil comprenant un composant d'interface d'utilisateur tel que décrit précédemment.

L'appareil est avantageusement constitué par l'un des appareils suivants :
- un smartphone ;
- une tablette ;
- un distributeur de billets.

L'invention sera mieux comprise à la lecture de la description suivante d'un mode de mise en oeuvre préférentiel de l'invention, donné à titre descriptif et non limitatif, et des dessins annexés dans lesquels :
- La figure 1 représente un smartphone pourvu d'une touche accueil permettant la saisie d'une empreinte digitale d'un utilisateur ;
- La figure 2 représente un smartphone comportant un composant d'interface d'utilisateur composé par un bouton selon l'invention ;
- La figure 3 représente le smartphone de la figure 2 tel qu'il est vu par l'utilisateur ;
- La figure 4 représente les différents éléments entrant dans la mise en oeuvre de l'invention ;
- La figure 5 est un diagramme montrant un exemple de fonctionnement de l'invention.

La figure 1 a été présentée en tant qu'état de la technique.

La figure 2 représente un smartphone comportant un composant d'interface d'utilisateur composé par un bouton selon l'invention.

Le composant d'interface d'utilisateur est référencé 21. Il s'agit ici d'un bouton (touche) permettant à l'utilisateur de réaliser une action en mode sécurisé, par exemple d'accéder à son solde de compte bancaire.

Une pluralité de capteurs d'empreinte digitale 20-1 à 20-33 sont représentés en traits pointillés. Ces capteurs sont juxtaposés et situés sous l'écran tactile 12 et ne sont pas visibles par l'utilisateur.

L'utilisateur ne voit que le bouton 21, tel que représenté sur la figure 3.

Lorsque l'utilisateur appuie ou glisse un doigt sur le composant d'interface 21, l'emplacement du composant d'interface étant aligné avec l'emplacement du moyen de capture de l'empreinte digitale, l'empreinte de l'utilisateur est saisie par des moyens de saisie et des moyens de comparaison comparent l'empreinte digitale de l'utilisateur avec une empreinte digitale de référence. Cette empreinte digitale de référence peut être stockée localement au niveau du terminal 11 ou au niveau d'un serveur distant. Dans ce dernier cas, l'empreinte saisie est transmise à ce serveur distant et la comparaison est effectuée au niveau du serveur distant.

Les moyens de comparaison autorisent l'application à réaliser l'action en mode sécurisé si l'empreinte digitale de l'utilisateur correspond à l'empreinte de référence et interdisent la réalisation de cette action en mode sécurisé dans le cas contraire.

L'emplacement du composant d'interface 21 est aligné avec l'emplacement du moyen de capture de l'empreinte digitale. Sur la figure 2, le moyen de capture est référencé 20-8.

Lorsque les moyens de capture sont nombreux, comme représenté sur la figure 2, un appui sur le bouton 21 entraîne automatiquement la saisie de l'empreinte. Il suffit par exemple que le bouton 21 soit suffisamment grand par rapport aux moyens de capture 20-1 à 20-33.

Si les moyens de capture sont peu nombreux, voire s'il n'y en a qu'un seul, il est prévu d'aligner le composant d'interface graphique avec ce ou ces moyens de capture d'empreinte digitale.

Le composant d'interface n'est pas nécessairement une touche ou un bouton d'accès à une application: il peut s'agir d'un lien Internet (dans quel cas, en cas de coïncidence des empreintes, une page Web s'affiche dans un mode sécurisé, par exemple en authentifiant automatiquement l'utilisateur auprès du serveur web distant en utilisant des moyens d'authentification locaux au terminal), un élément d'une liste déroulante, un élément d'un tableau, une case à cocher ou un onglet par exemple.

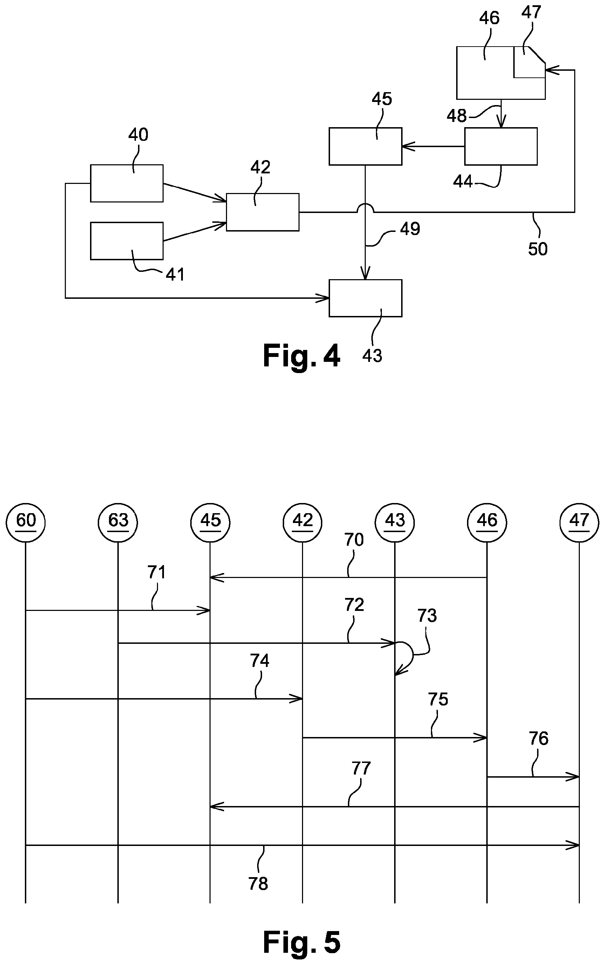

La figure 4 représente les différents éléments entrant dans la mise en oeuvre de l'invention.

Dans cette figure, les éléments référencés sont les suivants :
- Au moins un moyen de capture 40 d'une empreinte digitale de l'utilisateur ;
- Une empreinte de référence 41 ;
- Des moyens de comparaison 42 de l'empreinte saisie par les moyens de capture 40 avec l'empreinte de référence 41 ;
- Des moyens 43 de comparaison de l'emplacement des widgets par rapport aux moyens de capture d'empreinte 40 (facultatifs si l'empreinte digitale de l'utilisateur peut être saisie lorsque celui-ci appuie un de ses doigts sur un endroit quelconque de l'écran tactile 12 de l'appareil). Ces moyens 43 vérifient qu'il y a un moyen de capture d'empreinte 40 à l'endroit où le widget est présent et, dans la négative, alignent le widget sur un des moyens de capture ;
- Un widget 44 ;
- Un écran tactile 45 ;
- Une application 46, par exemple une application bancaire ou un navigateur Internet ;
- Une action sécurisée 47.

Le fonctionnement du système est le suivant :

L'application 46 génère, lors d'une étape 48, un widget 44 et l'affiche sur l'écran tactile 45. Il est alors vérifié (étape 49) que le widget 44 est positionné sur un moyen de capture d'empreinte digitale. Si ce n'est pas le cas, le widget est déplacé sur un de ces moyens de capture. L'utilisateur appui alors ou glisse un de ses doigts sur le widget 44 et son empreinte saisie est comparée avec l'empreinte de référence 41 par les moyens de comparaison 42. Si les deux empreintes coïncident, les moyens de comparaison 42 autorisent l'application (étape 50) à effectuer l'action sécurisée 47.

Un retour tactile, sonore ou graphique peut être prévu pour indiquer à l'utilisateur que son empreinte a été vérifiée positivement et donc qu'il a été authentifié. Il peut en être de même pendant la vérification de l'empreinte de l'utilisateur.

Lorsque l'empreinte a été vérifiée positivement, le système d'exploitation du terminal peut attribuer des privilèges plus élevés pendant l'exécution de l'action sécurisée. L'exécution en mode sécurisé peut aussi être notifiée visuellement auprès de l'utilisateur, par exemple en encadrant la fenêtre d'exécution d'un bandeau de couleur ou en affichant une icône particulière.

Si l'appareil est constitué par un distributeur de billets de banque par exemple, une authentification de l'utilisateur peut être réalisée à l'aide de deux facteurs : son code PIN et son empreinte. Après avoir saisi sont code PIN, l'utilisateur est invité à sélectionner un widget, son empreinte digitale est capturée et comparée avec son empreinte de référence (de préférence au niveau d'un serveur distant mais il est possible aussi de le faire localement) et, en cas de coïncidence des empreintes, l'utilisateur a accès à une action en mode sécurisé (consultation de ses comptes, réalisation d'un virement bancaire,...). De la même manière, l'empreinte digitale peut être capturée pendant la saisie du code PIN, les touches du clavier numérique faisant office de widget.

La figure 5 est un diagramme montrant un exemple de fonctionnement de l'invention.

A l'étape 70, l'application 46 affiche un widget sur l'écran tactile 45 de l'appareil. L'utilisateur, référencé 60, appuie alors sur le widget ou effectue un glissement du widget à l'aide d'un de ses doigts (étape 71). Des moyens de vérification de position 63 vérifient alors si l'utilisateur a demandé à accéder à une fonction en mode sécurisé. Si c'est le cas, ils en informent (étape 72) les moyens de comparaison 43 qui éventuellement modifient l'emplacement du widget pour que celui-ci se situe au-dessus d'un moyen de capture d'empreinte. Ceux-ci peuvent alors (étape 73) modifier la position du widget.

L'empreinte saisie est alors transmise aux moyens de comparaison d'empreinte 42 (étape 74).

En cas de coïncidence des empreintes, les moyens de comparaison 42 en informent l'application 46 (étape 75) qui permet alors à l'utilisateur d'accéder à l'action en mode sécurisé 47 (étape 76). A l'étape 77, l'action en mode sécurisé est affichée sur l'écran tactile 45 de l'appareil et l'utilisateur a accès (étape 78) à cette action en mode sécurisé.

L'invention concerne également un procédé d'authentification d'un utilisateur d'un appareil coopérant avec un écran tactile, l'authentification consistant à comparer une empreinte digitale de l'utilisateur avec une empreinte digitale de référence, ce procédé consistant à :
- Afficher un composant d'interface d'utilisateur sur l'écran tactile ;
- Authentifier positivement l'utilisateur si ce dernier appuie ou effectue un glissement avec un de ses doigts sur le composant d'interface d'utilisateur et que l'empreinte digitale capturée lors de cet appui ou du glissement correspond à l'empreinte digitale de référence.

L'invention s'applique de préférence lorsque l'écran tactile est du type permettant de capturer une empreinte digitale sur toute sa surface. Ceci évite d'avoir à positionner précisément le widget au-dessus d'un capteur d'empreinte digitale.

Alternativement, le procédé selon l'invention comprend une étape de positionnement alignant l'emplacement du composant d'interface d'utilisateur avec l'emplacement du moyen de capture de l'empreinte digitale de l'utilisateur. Ce positionnement est préférentiellement effectué avant la comparaison de l'empreinte capturée avec l'empreinte digitale de référence.

Dans le cas où l'authentification de l'utilisateur par son empreinte est négative, il peut lui être demandé d'entrer un code ou un mot de passe.

L'invention concerne également un appareil coopérant avec un écran tactile, cet appareil comprenant un composant d'interface d'utilisateur tel que décrit précédemment. L'appareil peut être par exemple constitué par un smartphone, une tablette ou un distributeur de billets.

Lorsque l'action s'exécute en mode sécurisé, le terminal indique visuellement ce mode sécurisé à l'utilisateur : cela peut se traduite en mettant un cadre de couleur autour de la fenêtre de l'application, ou en affichant une icône particulière à un endroit de l'écran (par exemple un cadenas).

## Revendications

1. Composant d'interface d'utilisateur (21) d'un appareil (11) coopérant avec un écran tactile (12), ledit composant d'interface d'utilisateur (21) permettant à une application (46) d'effectuer une action définie par ladite application (46) lorsque ledit utilisateur appuie ou glisse avec un doigt sur ledit composant d'interface d'utilisateur (21), ledit écran tactile (12) permettant de capturer une empreinte digitale dudit utilisateur, **caractérisé en ce que** l'emplacement dudit composant d'interface d'utilisateur (21) est aligné avec l'emplacement d'un moyen de capture (20-1 - 20-33) de ladite empreinte digitale, ledit composant d'interface d'utilisateur (21) coopérant avec des moyens de saisie et de comparaison (42) de ladite empreinte digitale dudit utilisateur avec une empreinte digitale de référence (41), lesdits moyens de comparaison (42) autorisant ladite application (46) à réaliser ladite action en mode sécurisé (47) si l'empreinte digitale dudit utilisateur correspond à ladite empreinte de référence (41) et interdisant la réalisation de ladite action en mode sécurisé (47) dans le cas contraire.

2. Composant d'interface d'utilisateur (21) selon la revendication 1, **caractérisé en ce qu'**il consiste en l'un des éléments suivants :
- Un lien Internet
- Un bouton d'accès à une application
- Un élément d'une liste déroulante
- Un élément d'un tableau
- Une case à cocher
- Un onglet

3. Procédé d'authentification d'un utilisateur d'un appareil (11) coopérant avec un écran tactile (12), ladite authentification consistant à comparer une empreinte digitale dudit utilisateur avec une empreinte digitale de référence (41), **caractérisé en ce qu'**il consiste à :
- Afficher un composant d'interface d'utilisateur (21) sur ledit écran tactile (12) ;
- Authentifier positivement ledit utilisateur si ce dernier appuie ou effectue un glissement avec un de ses doigts sur ledit composant d'interface d'utilisateur (21) et que l'empreinte digitale capturée lors dudit appui ou dudit glissement correspond à ladite empreinte digitale de référence (41).

4. Procédé d'authentification selon la revendication 3, **caractérisé en ce que** ledit écran tactile (12) est du type permettant de capturer une empreinte digitale sur toute sa surface.

5. Procédé d'authentification selon l'une des revendications 3 et 4, **caractérisé en ce qu'**il comprend une étape de positionnement alignant l'emplacement dudit composant d'interface d'utilisateur (21) avec l'emplacement dudit moyen de capture de l'empreinte digitale dudit utilisateur.

6. Procédé selon la revendication 5, **caractérisé en ce que** ledit positionnement est effectué avant la comparaison de l'empreinte capturée avec ladite empreinte digitale de référence (41).

7. Procédé d'authentification selon l'une des revendications 3 et 4, **caractérisé en ce qu'**il consiste à inviter ledit utilisateur à entrer un code si ladite authentification est négative.

8. Procédé selon la revendication 3, **caractérisé en ce qu'**il consiste à informer ledit utilisateur, par un retour tactile, sonore ou graphique, que son empreinte est en cours d'authentification.

9. Procédé selon la revendication 3, **caractérisé en ce que** lorsque ledit utilisateur est authentifié positivement, ledit appareil l'indique audit utilisateur par un retour tactile, sonore ou graphique.

10. Appareil (11) coopérant avec un écran tactile (12), **caractérisé en ce qu'**il comprend un composant d'interface d'utilisateur (21) selon l'une des revendications 1 et 2.

11. Appareil (11) selon la revendication 10, **caractérisé en ce qu'**il est constitué par l'un des appareils suivants :
- un smartphone ;
- une tablette ;
- un distributeur de billets.
